# EUROPÄISCHE PATENTSCHRIFT

(11) **EP 3 857 084 B1**
(45) Veröffentlichungstag und Bekanntmachung des Hinweises auf die Patenterteilung: **06.07.2022**
(21) Anmeldenummer: 19753332.6
(22) Anmeldetag: 12.08.2019
(51) Int. Cl.: F16C 33/66

(54) **MESSANORDNUNG FÜR SCHMIERSTOFF**
MEASURING ARRANGEMENT FOR LUBRICANT
ENSEMBLE DE MESURE POUR LUBRIFIANT

(30) Priorität: 27.09.2018 DE 102018216618
(43) Veröffentlichungstag der Anmeldung: 04.08.2021
(73) Patentinhaber: ZF Friedrichshafen AG, 88046 Friedrichshafen (DE)
(72) Erfinder: WOLF, Daniel, 88048 Friedrichshafen (DE); RIESS, Christian, 88239 Wangen (DE); KUTLUAY, Ümit, 88048 Friedrichshafen (DE); VATH, Andreas, 63849 Leidersbach (DE)
(74) Vertreter: ZF Friedrichshafen AG
(86) Internationale Anmeldenummer: PCT/EP2019/071550
(87) Internationale Veröffentlichungsnummer: WO 2020/064199

(56) Entgegenhaltungen:
- EP-A1- 1 710 432
- EP-A1- 2 385 248
- US-B1- 6 550 258

## Beschreibung

Die Erfindung betrifft eine Anordnung nach dem Oberbegriff von Anspruch 1.

Aus dem Stand der Technik sind Lösungen bekannt, um mittels Sensoren physikalische Größen von Lagern zu messen. Die Sensoren sind dazu in das Lager integriert. So beschreibt etwa die Druckschrift KR 20 130 027 814 ein Gleitlager mit integriertem Temperatursensor. Der Temperatursensor ist in einer Bohrung einer äußeren Lagerschale eingebracht, sodass seine Messspitze unmittelbar an eine Lauffläche des Lagers heranreicht.

Um einen Sensor in ein Lager zu integrieren, muss entsprechender Bauraum zur Verfügung stehen. Besonders problematisch ist die Messung von Planetenlagern in einem sich drehenden Planetenträger, da hier die Bauraumverhältnisse sehr beengt sind. Zudem drehen sich mit dem Planetenträger auch die Sensoren. Dies macht es erforderlich, ein Messsignal von dem sich drehenden Planetenträger zu einer gehäusefesten Auswerteeinheit zu übertragen. Entsprechende Drehübertragungs- oder Telemetrieeinrichtungen sind störungsanfällig und teuer.

Der Erfindung liegt die Aufgabe zugrunde, die den aus dem Stand der Technik bekannten Lösungen innewohnenden Nachteile zu vermeiden. Insbesondere sollen physikalische Größen eines Lagers zuverlässig und kostengünstig gemessen werden.

Diese Aufgabe wird gelöst durch eine Anordnung nach Anspruch 1. Bevorzugte Weiterbildungen sind in den Unteransprüchen enthalten. EP 2 385 248 A1 offenbart eine Anordnung nach dem Oberbegriff des Anspruchs 1.

Die Anordnung umfasst ein Lager, eine Schmierstoffleitung, einen Behälter und einen Sensor. Die Schmierstoffleitung weist zwei Mündungen auf, die sie schmierstoffleitend miteinander verbindet. Bei dem Behälter handelt es sich um ein Mittel zum Sammeln einer Flüssigkeit. Vorliegend dient der Behälter dazu, Schmierstoff zu sammeln. Ein Sensor ist ein Mittel zum Messen mindestens einer physikalischen Größe.

Erfindungsgemäß ist die Schmierstoffleitung ausgebildet, Schmierstoff aus einem Lagerspalt des Lagers in den Behälter einzuleiten. Eine erste Mündung der Schmierstoffleitung steht schmierstoffleitend mit dem Lagerspalt in Verbindung, sodass Schmierstoff aus dem Lagerspalt in die erste Mündung gelangt. Die Schmierstoffleitung leitet den Schmierstoff von der ersten Mündung zu einer zweiten Mündung. Dort tritt der Schmierstoff aus und gelangt in den Behälter.

Das Lager weist mindestens zwei Lagerringe auf, die jeweils mindestens eine Lagerlaufbahn ausbilden und relativ zueinander verdrehbar sind. Zwischen den Lagerlaufbahnen verläuft der Lagerspalt. Der Lagerspalt ist mindestens teilweise mit Schmierstoff gefüllt. Handelt es sich bei dem Lager um ein Gleitlager, gleiten die Lagerlaufbahnen direkt oder über einen Schmierstofffilm aneinander ab. Bei einem Wälzlager befinden sich Wälzkörper in dem Lagerspalt, die auf den Lagerlaufbahnen abrollen.

Der Sensor ist ausgebildet, mindestens eine physikalische Größe von Schmierstoff, der sich in dem Behälter befindet, d.h. von in dem Behälter gesammelten Schmierstoff, zu messen. Bei der physikalischen Größe handelt es sich um eine quantitativ bestimmbare Eigenschaft des Schmierstoffs. So kann es sich etwa um eine Temperatur, Viskosität, eine elektrische Eigenschaft oder einen Partikelgehalt des Schmierstoffs handeln.

Der Behälter ist räumlich von dem Lager entkoppelt und kann ortsfest angeordnet werden. Dadurch vereinfacht sich die Messung der physikalischen Größe des in dem Behälter befindlichen Schmierstoffs.

Da der Schmierstoff über die Schmierstoffleitung aus dem Lager ausgeleitet wurde, lassen sich anhand der Messung der physikalischen Größe des in dem Behälter befindlichen Schmierstoffs Rückschlüsse auf den Zustand des Lagers ziehen. Um möglichst aussagekräftige Messergebnisse zu erhalten, bietet es sich an, die erste Mündung der Schmierstoffleitung in einem Bereich des Lagers anzuordnen, in dem das Lager in einem Nennbetriebspunkt am höchsten belastet ist.

Um einen Pegelstand des in dem Behälter befindlichen Schmierstoffs zu regulieren, weist der Behälter in einer bevorzugten Weiterbildung einen Ablauf oder Überlauf auf. Über den Ablauf oder Überlauf wird der Schmierstoff aus dem Behälter herausgeleitet.

Ein Ablauf befindet sich bevorzugt am Grund des Behälters. Um die Menge des ausgeleiteten Schmierstoffs zu regulieren, weist der Ablauf bevorzugt eine Drossel oder ein schaltbares Ventil auf.

Ein Überlauf leitet den Schmierstoff immer dann aus dem Behälter aus, wenn ein Pegelstand des Schmierstoffs eine Schwelle überschreitet.

In einer darüber hinaus bevorzugten Weiterbildung ist ein Schmierstoffsumpf und eine Vorrichtung zum Einleiten von Schmierstoff aus dem Schmierstoffsumpf in den Lagerspalt des Lagers vorgesehen. Mit Schmierstoffsumpf wird ein Vorrat an Öl bezeichnet, der einen Start- und Endpunkt eines Schmierstoffkreislaufs bildet und von dem obengenannten Behälter verschieden ist. In den Schmierstoffkreislauf ist vorliegend auch das Lager integriert. Initiiert wird der Schmierstoffkreislauf durch die Vorrichtung zum Einleiten des Schmierstoffs in das Lager. Bei der Vorrichtung kann es sich etwa um eine Pumpe handeln, deren Saugseite schmierstoffleitend mit dem Schmierstoffsumpf und deren Druckseite schmierstoffleitend mit dem Lagerspalt des Lagers verbunden ist.

In einer darüber hinaus bevorzugten Weiterbildung ist der Ablauf oder Überlauf derart angeordnet, dass Schmierstoff, der über den Ablauf oder Überlauf aus dem Behälter austritt, in den Schmierstoffsumpf gelangt. Auf diese Weise schließt sich der oben beschriebene Schmierstoffkreislauf.

Die Erfindung eignet sich besonders für die Überwachung von Lagern, die nicht gehäusefest angeordnet sind. Derartige Lager sind in Planetenträgern zu finden. Entsprechend handelt es sich bei dem oben genannten Lager um ein Planetenlager. Die Anordnung umfasst einen Planetenträger und ein Planetenrad. Mittels des Lagers ist das Planetenrad drehbar in dem Planetenträger gelagert. Insbesondere kann auch der Planetenträger drehbar gelagert sein. Der Planetenträger bildet mindestens einen Teil der Schmierstoffleitung aus, oder mindestens ein Teil der Schmierstoffleitung ist an dem Planetenträger fixiert.

Da sich mit dem Planetenträger auch der genannte Teil der Schmierstoffleitung dreht, ist eine Vorrichtung erforderlich, die eine schmierstoffleitende Verbindung zwischen dem sich mit dem Planetenträger drehenden Teil der Schmierstoffleitung und dem gegebenenfalls gehäusefest angeordneten Behälter herstellt. Dies geschieht erfindungsgemäß mittels einer Auffangvorrichtung und einer schmierstoffleitenden Verbindung von der Auffangvorrichtung zu dem Behälter. Die Auffangvorrichtung ist so angeordnet, dass sie Schmierstoff, der aus der Schmierstoffleitung austritt, bei mindestens einer Drehwinkelstellung des Planetenträgers auffängt. Insbesondere kann die Auffangvorrichtung so angeordnet sein, dass sie sich bei der mindestens einen Drehwinkelstellung unterhalb einer Mündung des mindestens einen Teils der Schmierstoffleitung, aus der Schmierstoff austritt, befindet. Der austretende Schmierstoff tropft dann aufgrund der Schwerkraft in die Auffangvorrichtung und wird von dort über die schmierstoffleitende Verbindung in den Behälter eingeleitet. Die Auffangvorrichtung ist bevorzugt trichterförmig oder als Rinne ausgestaltet.

In einer bevorzugten Weiterbildung besteht mindestens ein Teil der Schmierstoffleitung aus einem thermisch isolierenden Material, etwa aus Kunststoff. Dies ist insbesondere dann von Vorteil, wenn die Temperatur des sich in dem Behälter befindlichen Schmierstoffs gemessen werden soll. Eine aus einem thermisch isolierenden Material bestehende Schmierstoffleitung verhindert, dass der Schmierstoff sich abkühlt und es so zu einer Verfälschung der Messergebnisse kommt.

Eine darüber hinaus bevorzugte Weiterbildung sieht vor, an unterschiedlichen Stellen Schmierstoff aus dem Lagerspalt des Lagers abzuführen und in unterschiedliche Behälter einzuleiten, um unterschiedliche Messergebnisse für die verschiedenen Positionen zu erhalten. Die Anordnung ist entsprechend mit einer weiteren Schmierstoffleitung, einem weiteren Behälter und einem weiteren Sensor weitergebildet. Die weitere Schmierstoffleitung ist ausgebildet, Schmierstoff aus dem Lagerspalt des Lagers in den weiteren Behälter einzuleiten. Der weitere Sensor ist ausgebildet, mindestens eine physikalische Größe von Schmierstoff, der sich in dem weiteren Behälter befindet, zu messen.

In Planetenträgern mit mehreren Planetenrädern werden die einzelnen Planetenräder bevorzugt einzeln überwacht. Eine bevorzugte Weiterbildung sieht vor, einen einzigen Behälter für mehrere Lager zu verwenden. Bei langsam drehenden Getrieben, etwa bei Windkraftgetrieben kann die Messung durch entsprechende Auslegung des Ablaufs in Gestalt einer Drossel oder durch Schaltung eines Ventils individuell für jedes Lager durchgeführt werden. Alternativ wir ein Mittelwert gebildet. Zwischen diesen Messweisen kann eine Umschaltung bzw. ein zyklischer Wechsel vorgenommen werden, um die Abweichung eines einzelnen Lagers vom Durchschnitt zu detektieren.

In einer darüber hinaus bevorzugten Weiterbildung führen die Schmierstoffleitungen unterschiedlicher Lager in unterschiedliche Auffangbehälter denen jeweils ein Sensor zugeordnet ist. Bei der Messung mehrerer physikalischer Größen, ist eine beliebige Parallel- oder Reihenschaltung der Auffangbehälter realisierbar. Lagertemperaturen etwa werden individuell für jedes Lager erfasst, indem austretendes Öl in separate Auffangbehälter geleitet wird. Anschließend wird das Öl aller Auffangbehälter in einen nachgeschalteten Auffangbehälter geleitet, um einen weiteren physikalischen Wert des Öls, z.B. die Partikelrate für alle Lager zu messen.

Bevorzugte Ausführungsbeispiele der Erfindung sind in Figuren dargestellt. Übereinstimmende Bezugsziffern kennzeichnen dabei gleiche oder funktionsgleiche Merkmale. Im Einzelnen zeigt:
- Fig. 1: eine Anordnung mit einem Sammelring;
- Fig. 2: eine weitere Anordnung mit einem Sammelring; und
- Fig. 3: einen Sammelring mit Auffangbehälter.

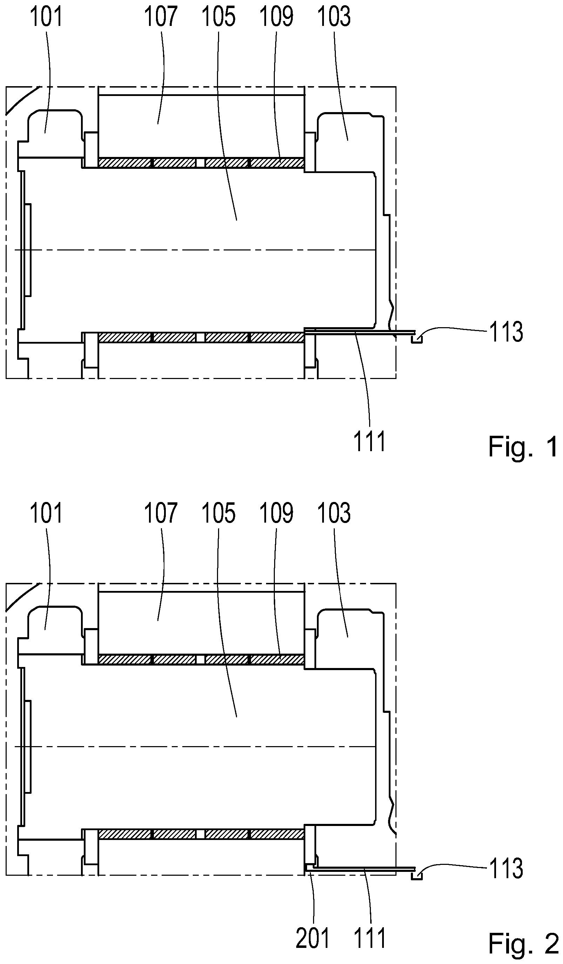

Die Figuren 1 und 2 stellen eine erste Wange 101 und eine zweite Wange 103 eines Planetenträgers dar. Die Wangen 101, 103 bilden jeweils einen Bolzensitz. In beiden Bolzensitzen sind gegenüberliegende Enden eines Planetenbolzens 105 fixiert. Auf dem Planetenbolzen 105 ist ein Planetenrad 107 mittels eines Gleitlagers 109 drehbar gelagert.

Die zweite Wange 103 des Planetenträgers weist eine Rohrleitung 111 auf. Diese dient dazu, Schmierstoff aus dem Gleitlager 109 abzuführen. Austrittsseitig der Rohrleitung 111 befindet sich eine Rinne 113, in die der Schmierstoff eingeleitet wird.

Gemäß Fig. 1 ist die Rohrleitung 111 unmittelbar an einen Lagerspalt des Gleitlagers 109 herangeführt, sodass ein Schmierstoffübergang von dem Lagerspalt zu der Rohrleitung 111 erfolgt. Alternativ lässt sich, wie in Fig. 2 dargestellt, aus dem Lagerspalt austretender Schmierstoff in einer weiteren Rinne 201, die mit der Rohrleitung 111 schmierstoffleitend verbunden ist, sammeln.

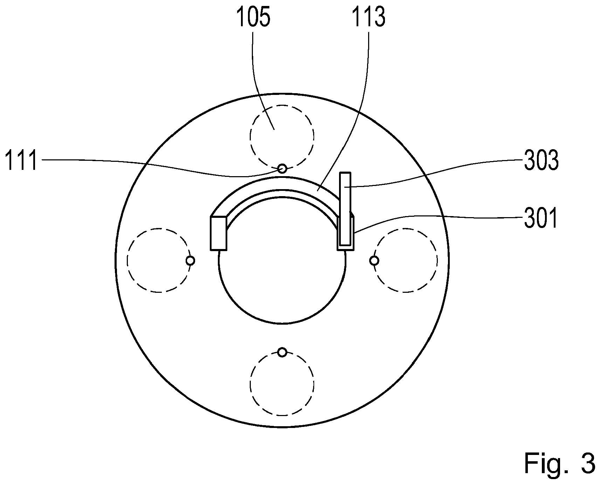

Eine Seitenansicht der zweiten Wange 103 des Planetenträgers zeigt Fig. 3. Hier ist zu sehen, dass das Leitungsrohr 111 bei einer Drehung des Planetenträgers oberhalb der Rinne 113 entlangläuft, sodass Schmierstoff, der aus dem Leitungsrohr 111 austritt, in die Rinne 113 hineintropft. Von der Rinne 113 aus gelangt der Schmierstoff in einen Auffangbehälter 301. In dem Auffangbehälter 301 ist ein Sensor 303 angeordnet, der eine physikalische Größe des in dem Auffangbehälter 301 befindlichen Schmierstoffs misst.

### Bezuqszeichen

- 101: erste Wange eines Planetenträgers
- 103: zweite Wange des Planetenträgers
- 105: Planetenbolzen
- 107: Planetenrad
- 109: Gleitlager
- 111: Rohrleitung
- 113: Rinne
- 201: Rinne
- 301: Auffangbehälter
- 303: Sensor

## Patentansprüche

1. Anordnung mit einem Lager (109), einer Schmierstoffleitung (111), einem Behälter (301) und einem Sensor (303); wobei
die Schmierstoffleitung (111) ausgebildet ist, Schmierstoff aus einem Lagerspalt des Lagers (109) in den Behälter (301) einzuleiten; wobei
der Sensor (303) ausgebildet ist, mindestens eine physikalische Größe von Schmierstoff, der sich in dem Behälter (301) befindet, zu messen; **gekennzeichnet durch** einen Planetenträger (101, 103), ein Planetenrad (107), eine Auffangvorrichtung (113) und eine schmierstoffleitende Verbindung von der Auffangvorrichtung (113) zu dem Behälter (301); wobei
das Planetenrad (107) mittels des Lagers (109) drehbar in dem Planetenträger gelagert ist; wobei
der Planetenträger (101, 103) mindestens einen Teil der Schmierstoffleitung (111) ausbildet, oder mindestens ein Teil der Schmierstoffleitung (111) an dem Planetenträger (101, 103) fixiert ist; und wobei
die Auffangvorrichtung (113) so angeordnet ist, dass sie Schmierstoff, der aus der Schmierstoffleitung (111) austritt, bei mindestens einer Drehwinkelstellung des Planetenträgers (113) auffängt.

2. Anordnung nach Anspruch 1; **dadurch gekennzeichnet, dass**
der Behälter (301) einen Ablauf oder Überlauf aufweist.

3. Anordnung nach einem der vorhergehenden Ansprüche; **gekennzeichnet durch** einen Schmierstoffsumpf und eine Vorrichtung zum Einleiten von Schmierstoff aus dem Schmierstoffsumpf in den Lagerspalt des Lagers (109).

4. Anordnung nach den vorhergehenden zwei Ansprüchen; **dadurch gekennzeichnet, dass**
der Ablauf oder Überlauf derart angeordnet ist, dass Schmierstoff, der über den Ablauf oder Überlauf aus dem Behälter (301) austritt, in den Schmierstoffsumpf gelangt.

5. Anordnung nach einem der vorhergehenden Ansprüche; **dadurch gekennzeichnet, dass**
mindestens ein Teil der Schmierstoffleitung (111) aus einem thermisch isolierenden Material besteht.

6. Anordnung nach einem der vorhergehenden Ansprüche; **gekennzeichnet durch** eine weitere Schmierstoffleitung, einem weiteren Behälter und einem weiteren Sensor; **dadurch gekennzeichnet, dass**
die weitere Schmierstoffleitung ausgebildet ist, Schmierstoff aus dem Lagerspalt des Lagers (109) in den weiteren Behälter einzuleiten; wobei
der weitere Sensor ausgebildet ist, mindestens eine physikalische Größe von Schmierstoff, der sich in dem weiteren Behälter befindet, zu messen.

7. Anordnung mit einer ersten Anordnung nach einem der vorhergehenden Ansprüche und einer zweiten Anordnung nach einem der vorhergehenden Ansprüche;
**dadurch gekennzeichnet, dass**
der Behälter der ersten Anordnung und der Behälter der zweiten Anordnung identisch sind.

8. Anordnung mit einer ersten Anordnung nach einem der vorhergehenden Ansprüche und einer zweiten Anordnung nach einem der vorhergehenden Ansprüche;
**dadurch gekennzeichnet, dass**
der Behälter der ersten Anordnung und der Behälter der zweiten Anordnung unterschiedlich sind.

## Claims

1. Arrangement having a bearing (109), having a lubricant line (111), having a container (301) and having a sensor (303); wherein
the lubricant line (111) is designed to introduce lubricant into the container (301) from a bearing gap of the bearing (109); wherein
the sensor (303) is designed to measure at least one physical variable of lubricant situated in the container (301); **characterized by**
a planet carrier (101, 103), a planet gear (107), a catching device (113) and a lubricant-conducting connection from the catching device (113) to the container (301); wherein
the planet gear (107) is mounted rotatably in the planet carrier by means of the bearing (109); wherein
the planet carrier (101, 103) forms at least a part of the lubricant line (111), or at least a part of the lubricant line (111) is fixed to the planet carrier (101, 103); and wherein
the catching device (113) is arranged in such a way that, in at least one rotational angle position of the planet carrier (113), it catches lubricant exiting the lubricant line (111).

2. Arrangement according to Claim 1; **characterized in that**
the container (301) has a drain or overflow.

3. Arrangement according to either of the preceding claims; **characterized by** a lubricant sump and a device for introducing lubricant into the bearing gap of the bearing (109) from the lubricant sump.

4. Arrangement according to the preceding two claims; **characterized in that**
the drain or overflow is arranged in such a way that lubricant exiting the container (301) via the drain or overflow passes into the lubricant sump.

5. Arrangement according to one of the preceding claims; **characterized in that**
at least a part of the lubricant line (111) consists of a thermally insulating material.

6. Arrangement according to one of the preceding claims; **characterized by** a further lubricant line, a further container and a further sensor; **characterized in that**
the further lubricant line is designed to introduce lubricant into the further container from the bearing gap of the bearing (109); wherein
the further sensor is designed to measure at least one physical variable of lubricant situated in the further container.

7. Arrangement having a first arrangement according to one of the preceding claims and having a second arrangement according to one of the preceding claims; **characterized in that**
the container of the first arrangement and the container of the second arrangement are identical.

8. Arrangement having a first arrangement according to one of the preceding claims and having a second arrangement according to one of the preceding claims; **characterized in that**
the container of the first arrangement and the container of the second arrangement are different.

## Revendications

1. Ensemble comprenant un palier (109), un conduit de lubrifiant (111), un récipient (301) et un capteur (303); le conduit de lubrifiant (111) étant conçu pour introduire du lubrifiant depuis un espace du palier (109) jusque dans le récipient (301);
le capteur (303) étant adapté pour mesurer au moins une grandeur physique de lubrifiant situé dans le récipient (301) ; **caractérisé par** un porte-satellites (101, 103), une roue planétaire (107), un dispositif collecteur (113) et une liaison conductrice de lubrifiant allant du dispositif collecteur (113) au récipient (301);
la roue planétaire (107) étant montée à rotation dans le porte-satellites au moyen du palier (109);
le porte-satellites (101, 103) formant au moins une partie du conduit de lubrifiant (111) ou au moins une partie du conduit de lubrifiant (111) étant fixée au porte-satellites (101, 103); et
le dispositif collecteur (113) étant disposé de manière à recueillir le lubrifiant qui sort du conduit de lubrifiant (111) dans au moins une position d'angle de rotation du porte-satellites (113).

2. Ensemble selon la revendication 1, **caractérisé en ce que** le récipient (301) comporte une purge ou un trop-plein.

3. Ensemble selon l'une des revendications précédentes, **caractérisé par**
un carter de lubrifiant et un dispositif d'introduction de lubrifiant depuis le carter de lubrifiant jusque dans l'espace du palier (109).

4. Ensemble selon les deux revendications précédentes, **caractérisé en ce que**
la purge ou le trop-plein est disposé(e) de manière à ce que le lubrifiant qui sort du récipient (301) par la purge ou le trop-plein arrive dans le carter de lubrifiant.

5. Ensemble selon l'une des revendications précédentes, **caractérisé en ce que**
au moins une partie du conduit de lubrifiant (111) est en un matériau thermiquement isolant.

6. Ensemble selon l'une des revendications précédentes, **caractérisé par** un autre conduit de lubrifiant, un autre récipient et un autre capteur, **caractérisé en ce que**
l'autre conduit de lubrifiant est conçu pour introduire du lubrifiant depuis l'espace du palier (109) jusque dans l'autre récipient ; l'autre capteur étant adapté pour mesurer au moins une grandeur physique de lubrifiant situé dans l'autre récipient.

7. Ensemble comprenant un premier ensemble selon l'une des revendications précédentes et un deuxième ensemble selon l'une des revendications précédentes, **caractérisé en ce que**
le récipient du premier ensemble et le récipient du deuxième ensemble sont identiques.

8. Ensemble comprenant un premier ensemble selon l'une des revendications précédentes et un deuxième ensemble selon l'une des revendications précédentes, **caractérisé en ce que**
le récipient du premier ensemble et le récipient du deuxième ensemble sont différents.
